# EUROPEAN PATENT SPECIFICATION

(11) **EP 3 217 751 B1**
(45) Date of publication and mention of the grant of the patent: **12.02.2020**
(21) Application number: 15857182.8
(22) Date of filing: 30.04.2015
(51) Int. Cl.: H04W 72/12

(54) **SEMI-PERSISTENCE SCHEDULING CONTROL METHOD AND DEVICE**
VERFAHREN UND VORRICHTUNG ZUR STEUERUNG VON SEMIPERSISTENTER PLANUNG
PROCÉDÉ ET DISPOSITIF DE COMMANDE DE PROGRAMMATION À SEMI-PERSISTANCE

(30) Priority: 03.11.2014 CN 201410610412
(43) Date of publication of application: 13.09.2017
(73) Proprietor: ZTE Corporation, Shenzhen, Guangdong 518057 (CN)
(72) Inventor: WANG, Lei, Shenzhen Guangdong 518057 (CN); LIU, Qiaoyan, Shenzhen Guangdong 518057 (CN)
(74) Representative: Petraz, Gilberto Luigi
(86) International application number: PCT/CN2015/078111
(87) International publication number: WO 2016/070596

(56) References cited:
- EP-A1- 2 166 804
- EP-A1- 2 475 208
- EP-A1- 2 654 358
- WO-A1-2009/086668
- CN-A- 102 056 174
- CN-A- 102 202 343
- CN-A- 102 647 718
- US-A1- 2013 083 702

## Description

### TECHNICAL FIELD

The present disclosure relates to a wireless communication system, and more particularly, to a semi-persistence scheduling control method and device.

### BACKGROUND

At present, mobile communication systems generally use shared resource allocation scheduling, which has the advantage that the wireless communication resources can be used to a great extent. For this scheduling manner, the original circuit domain voice service has been canceled, and has been replaced by the data field VoIP (Voice over Internet Protocol, VoIP) service. However, because the number of voice users is often relatively large, the shared resource allocation method needs to send the relevant control information for each transmission, thereby an overhead of control information is too large. For this kind of real-time service in which the packet size is relatively fixed and the arrival time interval is regular, the overhead of control information can be effectively reduced by adopting the semi-persistence scheduling technology.

The SPS (Semi-Persistence Scheduling) refers to a scheduling method that is designed for a particular service, which uses pre-allocated resources at fixed times, and at other times uses a dynamic scheduling (retransmission) mechanism. Specifically, when the semi-persistence scheduling is activated, a specified resource block is periodically assigned to a designated user to adapt to certain periodic services with fixed payload size, so as to reduce the system overhead brought out by information such as resource allocation and indication, and the data retransmission of semi-persistence scheduling uses a dynamic scheduling method. In general, because the packet size of VoIP is relatively fixed, and has a certain periodicity, it is relatively in line with the semi-persistence scheduling.

In the LTE (Long Term Evolution) system, when the user equipment only has the VoIP service, or, in addition to the VoIP service, the user equipment has a small amount of non-VoIP services, the use of SPS scheduling can achieve a better scheduling purpose, and save a large number of PDCCH (Physical Downlink Control Channel) resources. However, if the user equipment not only has the VoIP service, but also contains a large number of other dynamic scheduling services, there is no need to use the SPS scheduling. Because of the large amount of dynamic service data, the dynamic scheduling will be more frequent, resulting in that the saving degree of the PDCCH is not as good as we'd expected, and the complexity of the system increases. Thus, there is a need for a scheduling algorithm for switching between the VoIP services and the non-VoIP services.

The section above provides background information related to the present disclosure which is not necessarily prior art.

Patent document EP2654358A1 discloses a resource scheduling method, apparatus, and base station.

Patent document WO2009086668A1 discloses a semi-persistent scheduling method and apparatus based on statistically multiplexing in time and frequency resource.

Patent document EP2166804A1 discloses a deactivation of semi-persistent resource allocations in a mobile communication network.

Patent document EP2475208A1 discloses a method and evolved NodeB for semi-persistent scheduling reactivation.

Patent document US20130083702A1 discloses an activating and deactivating semi-persistent scheduling for an LTE VOIP radio bearer.

### SUMMARY

In order to solve the above technical problems, the present invention provides a semi-persistence scheduling control method and a semi-persistence scheduling control device according to the appended claims.

More in particular, the present invention provides a semi-persistence scheduling control method and device to solve at least the problems in the communication system provided in the related art that the resources are wasted due to the use of the dynamic scheduling all the time and the system overhead is too large.

Embodiments of the present disclosure provide a semi-persistence scheduling control method, including:
obtaining dynamic service statistical information generated by dynamic service due to dynamic scheduling and accumulated in a historical time period; and
determining whether the dynamic service statistical information exceeds a set threshold value; if the dynamic service statistical information exceeds the set threshold value, allocating a resource without using semi-persistence scheduling in a current time period; and if the dynamic service statistical information does not exceed the set threshold value, allocating the resource by using the semi-persistence scheduling in the current time period.

In an embodiment of the present disclosure, the dynamic service statistical information includes at least one of: new transmission times of dynamic scheduling, and new transmission service data amount of dynamic scheduling; and
the obtaining dynamic service statistical information generated by the dynamic service due to the dynamic scheduling and accumulated in the historical time period includes:
obtaining the dynamic service statistical information generated by the dynamic service due to the dynamic scheduling and accumulated in a previous historical time period immediately preceding the current time period.

In an embodiment of the present disclosure, the determining whether the dynamic service statistical information exceeds the set threshold value is performed by one of the following manners:
when obtaining the new transmission times of dynamic scheduling, determining whether the new transmission times of dynamic scheduling exceeds a preset first threshold value;
when obtaining the new transmission service data amount of dynamic scheduling, determining whether the new transmission service data amount of dynamic scheduling exceeds a preset second threshold value; and
when obtaining the new transmission times of dynamic scheduling and the new transmission service data amount of dynamic scheduling, the determination includes one of the following ways:
   only determining whether the new transmission times of dynamic scheduling exceeds the preset first threshold value;
   only determining whether the new transmission service data amount of dynamic scheduling exceeds the preset second threshold value; and
   determining whether the new transmission times of dynamic scheduling exceeds the preset first threshold value and also determining whether the new transmission service data amount of dynamic scheduling exceeds the preset second threshold value.

In an embodiment of the present disclosure, in the case where a semi-persistence scheduling state has been activated in the historical time period, the step of allocating the resource without using the semi-persistence scheduling in the current time period if the dynamic service statistical information exceeds the set threshold value; and allocating the resource by using the semi-persistence scheduling in the current time period if the dynamic service statistical information does not exceed the set threshold value, includes:
if the dynamic service statistical information exceeds the set threshold value, deactivating the semi-persistence scheduling state within the current time period, releasing a semi-persistence scheduling resource, and allocating the resource using dynamic scheduling; and if the dynamic service statistical information does not exceed the set threshold value, maintaining the semi-persistence scheduling state within the current time period, and allocating the resource by using the semi-persistence scheduling.

In an embodiment of the present disclosure, in the case where the semi-persistence scheduling state has not been activated within the historical time period, the step of allocating the resource without using the semi-persistence scheduling in the current time period if the dynamic service statistical information exceeds the set threshold value; and allocating the resource by using the semi-persistence scheduling in the current time period if the dynamic service statistical information does not exceed the set threshold value, includes:
if the dynamic service statistical information exceeds the set threshold value, not activating the semi-persistence scheduling state within the current time period, and allocating the resource by using the dynamic scheduling; and if the dynamic service statistical information does not exceed the set threshold value, activating the semi-persistence scheduling state within the current time period, and allocating the resource by using the semi-persistence scheduling.

According to another aspect of the embodiments of the present disclosure, there is provided a semi-persistence scheduling control device, including:
an information obtaining module configured to obtain dynamic service statistical information generated by dynamic service due to dynamic scheduling and accumulated in a historical time period;
an information determining module configured to determine whether the dynamic service statistical information obtained by the information obtaining module exceeds a set threshold value; and
a scheduling control module configured to, if the information determining module determines that the dynamic service statistical information exceeds the set threshold value, allocate a resource without using semi-persistence scheduling in a current time period; and if the information determining module determines that the dynamic service statistical information does not exceed the set threshold value, allocate the resource by using the semi-persistence scheduling in the current time period.

In an embodiment of the present disclosure, the dynamic service statistical information includes at least one of: new transmission times of dynamic scheduling, and new transmission service data amount of dynamic scheduling; and
the information obtaining module is configured to obtain the dynamic service statistical information generated by the dynamic service due to the dynamic scheduling and accumulated in a previous historical time period immediately preceding the current time period.

In an embodiment of the present disclosure,
the information determining module is configured to, when the information obtaining module obtains the new transmission times of dynamic scheduling, determine whether the new transmission times of dynamic scheduling exceeds a preset first threshold value; or
the information determining module is configured to, when the information obtaining module obtains the new transmission service data amount of dynamic scheduling, determine whether the new transmission service data amount of dynamic scheduling exceeds a preset second threshold value; or
the information determining module is configured to, when the information obtaining module obtains the new transmission times of dynamic scheduling and the new transmission service data amount of dynamic scheduling, only determine whether the new transmission times of dynamic scheduling exceeds the preset first threshold value; or only determine whether the new transmission service data amount of dynamic scheduling exceeds the preset second threshold value; or determine whether the new transmission times of dynamic scheduling exceeds the preset first threshold value and also determine whether the new transmission service data amount of dynamic scheduling exceeds the preset second threshold value.

In an embodiment of the present disclosure, in the case where a semi-persistence scheduling state has been activated in the historical time period, the scheduling control module is configured to, if the information determining module determines that the dynamic service statistical information exceeds the set threshold value, deactivate the semi-persistence scheduling state within the current time period, release a semi-persistence scheduling resource, and allocate the resource using dynamic scheduling; and if the information determining module determines that the dynamic service statistical information does not exceed the set threshold value, maintain the semi-persistence scheduling state within the current time period, and allocate the resource by using the semi-persistence scheduling.

In an embodiment of the present disclosure, in the case where the semi-persistence scheduling state has not been activated within the historical time period, the scheduling control module is configured to, if the information determining module determines that the dynamic service statistical information exceeds the set threshold value, not activate the semi-persistence scheduling state within the current time period, and allocate the resource by using the dynamic scheduling; and if the information determining module determines that the dynamic service statistical information does not exceed the set threshold value, activate the semi-persistence scheduling state within the current time period, and allocate the resource by using the semi-persistence scheduling.

The present disclosure has the following advantageous effects.

The embodiments of the present disclosure provide a semi-persistence scheduling control method and device, in which the activation of the semi-persistence scheduling state is controlled according to the dynamic service statistical information generated by dynamic service due to dynamic scheduling and accumulated in the historical time period, thereby improving the flexibility of usage of the semi-persistence scheduling, reducing the complexity of the system, guaranteeing the service quality of the voice service, and being capable of flexibly determining the applicable scenes of the SPS.

This section provides a summary of various implementations or examples of the technology described in the disclosure, and is not a comprehensive disclosure of the full scope or all features of the disclosed technology.

### BRIEF DESCRIPTION OF THE DRAWINGS

Fig. 1 is a flow chart of a semi-persistence scheduling control method provided by a first embodiment of the present disclosure; and
Fig. 2 is a schematic diagram of a semi-persistence scheduling control device provided by a second embodiment of the present disclosure.

### DETAILED DESCRIPTION

The technical solutions in the embodiments of the present disclosure will now be described clearly and completely in conjunction with the accompanying drawings in the embodiments of the present disclosure, and it will be apparent that the described embodiments are only part of the embodiments of the present disclosure and are not intended to be exhaustive. All other embodiments obtained by those skilled in the art based on the embodiments in the present disclosure without inventive labor are within the scope of the present disclosure.

The present disclosure will now be described in further detail with reference to the specific implementation manners in conjunction with the accompanying drawings.

### First Embodiment

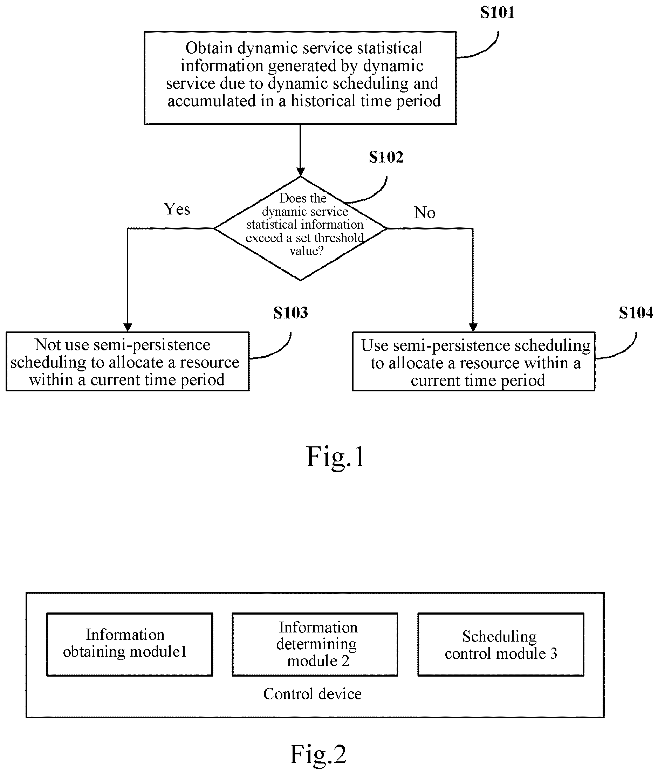

Fig. 1 is a flow chart of a semi-persistence scheduling control method provided by an embodiment of the present disclosure. As shown in Fig. 1, the semi-persistence scheduling control method includes the following steps.

In S101, dynamic service statistical information generated by dynamic service due to dynamic scheduling and accumulated in a historical time period is obtained.

Specifically, in order to improve the flexibility of usage of the semi-persistence scheduling and reduce the complexity of the system, whether the semi-persistence scheduling state is effective or not is controlled according to the dynamic service statistical information generated by dynamic service due to dynamic scheduling and accumulated in a historical time period, so as to save the channel resources, and reduce the overhead of the system.

In the present embodiment, since the uplink dynamic service and the downlink dynamic service are independent from each other and do not interfere with each other, for both the uplink dynamic service and the downlink dynamic service, the dynamic service statistical information may be generated respectively by the uplink dynamic service and the downlink dynamic service due to the dynamic scheduling and accumulated in the historical time period, and the dynamic service statistical information may respectively act on the uplink and the downlink. Thus, the method in the present embodiment does not distinguish between uplink and downlink, and is applicable to both the uplink dynamic service and the downlink dynamic service. The dynamic service statistical information is the information generated and accumulated in the dynamic scheduling process of the dynamic service. The information may represent behavioral characteristics shown by the dynamic service during the dynamic scheduling process, and includes at least one of the following information: new transmission times of dynamic scheduling, and new transmission service data amount of dynamic scheduling. The method for obtaining the dynamic service statistical information includes, but is not limited to, obtaining the new transmission times of dynamic scheduling and/or the new transmission service data amount of dynamic scheduling generated by the dynamic service due to the dynamic scheduling and accumulated in a previous historical time period immediately preceding the current time period. This historical time period and the current time period are continuous period of time. That is, the new transmission times of dynamic scheduling and/or the new transmission service data amount of dynamic scheduling of the dynamic service in a previous time window immediately adjacent to the current time window are obtained. For example, to determine the resource scheduling mode within the current 3s (3 seconds), it is possible to obtain the new transmission times of dynamic scheduling and/or the new transmission service data amount of dynamic scheduling of the dynamic service by the dynamic scheduling in a previous 3s, or, it is possible to obtain the new transmission times of dynamic scheduling and/or the new transmission service data amount of dynamic scheduling of the dynamic service by the dynamic scheduling in each Is in the previous 3s. In S102, it is determined whether the dynamic service statistical information exceeds a set threshold value.

Specifically, after the dynamic service statistical information generated by service due to dynamic scheduling and accumulated in the historical time period is acquired, it is possible to determine whether or not the dynamic service statistical information exceeds a set threshold value. The set threshold value is configured in advance, and may be configured to be different values according to different scenes. The dynamic service statistical information is determined, and if it is determined that all the dynamic service statistical information exceeds the set threshold value, the process proceeds to S103; otherwise, the process proceeds to S104.

In the present embodiment, the determining method and the determining result of the dynamic service statistical information based on the acquired dynamic service statistical information include, but are not limited to, one of the following modes.

In mode 1, when obtaining the new transmission times of dynamic scheduling of the dynamic service within the historical time period, it is determined whether the new transmission times of dynamic scheduling exceeds a preset first threshold value M. If it is determined that the new transmission times of dynamic scheduling exceeds the preset first threshold value M, the process proceeds to S103; otherwise, the process proceeds to S104.

In mode 2, when obtaining the new transmission service data amount of dynamic scheduling of the dynamic service within the historical time period, it is determined whether the new transmission service data amount of dynamic scheduling exceeds a preset second threshold value N. If it is determined that the new transmission service data amount of dynamic scheduling exceeds the preset second threshold value N, the process proceeds to S103; otherwise, the process proceeds to S104.

In mode 3, when obtaining the new transmission times of dynamic scheduling and the new transmission service data amount of dynamic scheduling of the dynamic service within the historical time period, the determination includes one of the following ways:
(1) it is only determined whether the new transmission times of dynamic scheduling exceeds the preset first threshold value M, and if yes, the process proceeds to S103; otherwise, the process proceeds to S104;
(2) it is only determined whether the new transmission service data amount of dynamic scheduling exceeds the preset second threshold value N, and if yes, the process proceeds to S103; otherwise, the process proceeds to S104;and
(3) it is determined whether the new transmission times of dynamic scheduling exceeds the preset first threshold value M and it is also determined whether the new transmission service data amount of dynamic scheduling exceeds the preset second threshold value N, only if the new transmission times of dynamic scheduling exceeds the preset first threshold value M or the new transmission service data amount of dynamic scheduling exceeds the preset second threshold value N, the process proceeds to S103; otherwise, the process proceeds to S104. That is, only when the new transmission times of dynamic scheduling does not exceed the preset first threshold value M and the new transmission service data amount of dynamic scheduling does not exceed the preset second threshold value N, the process proceeds to S104; otherwise, the process proceeds to S103.

In S103, a resource is allocated without using the semi-persistence scheduling in a current time period.

Specifically, if it is determined that the dynamic service statistical information exceeds the set threshold value, the resource is allocated without using the semi-persistence scheduling in the current time period. The specific control method according to the resource scheduling mode in the historical time period includes one of the following modes.

In mode 1, if the semi-persistence scheduling state has been activated in the historical time period, the semi-persistence scheduling state is deactivated in the current time period, the semi-persistence scheduling resource is released, and the resource is allocated by dynamic scheduling.

In mode 2, if the semi-persistence scheduling state has not been activated in the historical time period, the semi-persistence scheduling state is not activated in the current time period, and the resource is allocated by the dynamic scheduling.

It should be noted that, when the voice service participates in the dynamic scheduling, because the priority of the voice service is higher, the voice service will be packed preferentially during the dynamic scheduling, and the service quality of the voice service is ensured at first, so the dynamic scheduling will not affect the voice service.

In S104, the resource is allocated by using the semi-persistence scheduling in the current time period.

In particular, if it is determined that the dynamic service statistical information does not exceed the set threshold value, the resource is allocated by using the semi-persistence scheduling in the current time period. The specific control method according to the resource scheduling mode in the historical time period includes one of the following modes.

In mode 1, if the semi-persistence scheduling state has been activated in the historical time period, the semi-persistence scheduling state is maintained in the current time period, and the resource is allocated by the semi-persistence scheduling.

In mode 2, if the semi-persistence scheduling state has not been activated in the historical time period, the semi-persistence scheduling state is activated in the current time period, and the resource is allocated by using the semi-persistence scheduling.

Through the use of the semi-persistence scheduling for allocating resources, when there is only the VoIP service, or, in addition to the VoIP service, there are a small amount of non-VoIP services, the use of the SPS scheduling can achieve better scheduling purposes, and save a lot of PDCCH resources.

### Second Embodiment

Fig. 2 is a schematic diagram of a semi-persistence scheduling control device according to a second embodiment of the present disclosure. As shown in Fig. 2, the semi-persistence scheduling control device includes: an information obtaining module 1, an information determining module 2, and a scheduling control module 3.

The information obtaining module 1 is configured to obtain dynamic service statistical information generated by dynamic service due to dynamic scheduling and accumulated in a historical time period.

The information determining module 2 is configured to determine whether the dynamic service statistical information obtained by the information obtaining module 1 exceeds a set threshold value.

The scheduling control module 3 is configured to, if the information determining module 2 determines that the dynamic service statistical information exceeds the set threshold value, allocate a resource without using semi-persistence scheduling in a current time period; and if the information determining module 2 determines that the dynamic service statistical information does not exceed the set threshold value, allocate the resource by using the semi-persistence scheduling in the current time period.

In an embodiment, the dynamic service statistical information obtained by the information obtaining module 1 includes at least one of the following information: new transmission times of dynamic scheduling, and new transmission service data amount of dynamic scheduling; and the information obtaining module 1 is configured to obtain the dynamic service statistical information generated by the dynamic service due to the dynamic scheduling and accumulated in a previous historical time period immediately preceding the current time period.

In an embodiment, when the information obtaining module 1 obtains the new transmission times of dynamic scheduling, the information determining module 2 is configured to determine whether the new transmission times of dynamic scheduling exceeds a preset first threshold value; or when the information obtaining module 1 obtains the new transmission service data amount of dynamic scheduling, the information determining module 2 is configured to, determine whether the new transmission service data amount of dynamic scheduling exceeds a preset second threshold value; or when the information obtaining module 1 obtains the new transmission times of dynamic scheduling and the new transmission service data amount of dynamic scheduling, the information determining module 2 is configured to, only determine whether the new transmission times of dynamic scheduling exceeds the preset first threshold value; or only determine whether the new transmission service data amount of dynamic scheduling exceeds the preset second threshold value; or determine whether the new transmission times of dynamic scheduling exceeds the preset first threshold value and also determine whether the new transmission service data amount of dynamic scheduling exceeds the preset second threshold value.

In an embodiment, in the case where a semi-persistence scheduling state has been activated in the historical time period, the scheduling control module 3 is configured to, if the information determining module 2 determines that the dynamic service statistical information exceeds the set threshold value, deactivate the semi-persistence scheduling state within the current time period, release a semi-persistence scheduling resource, and allocate the resource using dynamic scheduling; otherwise, the scheduling control module 3 is configured to maintain the semi-persistence scheduling state within the current time period, and allocate the resource by using the semi-persistence scheduling.

In an embodiment, in the case where the semi-persistence scheduling state has not been activated within the historical time period, the scheduling control module 3 is configured to, if the information determining module 2 determines that the dynamic service statistical information exceeds the set threshold value, not activate the semi-persistence scheduling state within the current time period, and allocate the resource by using the dynamic scheduling; otherwise, activate the semi-persistence scheduling state within the current time period, and allocate the resource by using the semi-persistence scheduling.

### Third Embodiment

In the present embodiment, how to control the semi-persistence scheduling to be effective is illustrated by configuring a preset first threshold value M of the new transmission times, which is also applicable for other similar configuration, such as the preset second threshold value N of the service data amount.
(1) It is supposed that a statistical window length (a historical time window) is Is. In the normal scheduling scenario of the LTE system, only the QCI1 service is established. The QCI1 service is the VoIP service. The related parameters of the QCI1 service are configured, the preset first threshold value M of the new transmission times of the service is configured to be 100, and parameters of the SPS scheduling are configured. When the QCI1 service is established successfully, because of the particularity of the VoIP service, there are up to 50 data packets per second, which is not reaching M, so in the current time window, the SPS state is successfully activated. After the SPS state is activated, the number of dynamic scheduling drops to 0 and the state will not exit to the dynamic scheduling scenario. In this scenario, the SPS state saves the PDCCH resources to an extreme.
(2) It is assumed that the statistical window length (historical time window) is Is. In the normal scheduling scenario of the LTE system, the QCI1 service and the QCI8 service are established. The QCI1 service is the VoIP service, and the QCI8 service is non-VoIP service. The relevant parameters of the QCI1 and QCI8 services are configured, the rate requirement of the QCI8 is configured to be 50M, the preset first threshold value M of the new transmission times of the service is configured to be 100, and the parameter of the SPS scheduling is configured. When the QCI1 and QCI8 services are established successfully, because of the particularity of the VoIP service, there are up to 50 data packets per second, while the rate requirement of the QCI8 service is configured to be 50M, so the dynamic scheduling will frequently perform the scheduling of the QCI8 service, almost full scheduling. At this point, a large number of dynamic scheduling exceeds M, thus the SPS state cannot be activated in the current time window. The dynamic scheduling will schedule the QCI1 and QCI8 services together, and because the QCI1 service has a higher priority, it will give priority to guarantee the service quality of the QCI1 service.
(3) It is supposed that the statistical window length (historical time window) is Is. In the normal scheduling scenario of LTE system, the QCI1 service and QCI8 service are established. The QCI1 service is the VoIP service, and the QCI8 is the non-VoIP service. The relevant parameters of the QCI1 and QCI8 services are configured, the rate requirement of the QCI8 is configured to be 50k, the preset first threshold value M of new transmission times of the service is configured to be 100, and the parameter of the SPS scheduling is configured. When the QCI1 and QCI8 services are successfully established, because of the particularity of VoIP service, there are up to 50 data packets per second, and because the rate requirement of the QCI8 service is only 50k, the number of the dynamic scheduling of the QCI1 and QCI8 services together cannot exceed M, the SPS status is successfully activated in the current time window. The QCI1 service is processed by the SPS, which saves a lot of PDCCH resources, and a small number of QCI8 service is performed by a few times of dynamic scheduling, the costs of PDCCH resources are less.
(4) It is assumed that the statistical window length (historical time window) is 3s, and there are three Is small windows in the 3s window. If the new transmission times is smaller than M in consecutive three times in Is small windows, the SPS state is successfully activated in the current time window. In the normal scheduling scenario of the LTE system, only the QCI1 service is established. The QCI1 service is the VoIP service. The related parameters of the QCI1 service are configured, the preset first threshold value M of the new transmission times of the service is configured to be 100, and the parameter of the SPS scheduling is configured. When the QCI1 service is established successfully, because of the particularity of VoIP services, there are up to 50 data packets per second, which does not reach M, in three consecutive times, the new transmission times is less than M, and the SPS state is successfully activated in the current time window. After the SPS state is activated, the number of dynamic scheduling drops to 0 and the state will not exit to the dynamic scheduling scenario. In this scenario, the SPS state saves PDCCH resources to the greatest extent.
(5) It is supposed that the statistical window length (historical time window) is 3s. In the normal scheduling scenario of the LTE system, only the QCI1 service is established. The QCI1 service is the VoIP service. The related parameters of the QCI1 service are configured, the preset first threshold value M of the new transmission times of the service is configured to be 300, and the SPS scheduling parameter is configured. When the QCI1 service is established successfully, because of the particularity of VoIP services, there are up to 50 data packets per second, which does not reach M within 3s, that is, the new transmission times is less than M within 3s, thereby the SPS state is activated in the current time window successfully. After the SPS state is activated, the number of dynamic scheduling drops to 0 and the state will not exit to the dynamic scheduling scenario. In this scenario, the SPS state saves PDCCH resources to the greatest extent.

## Claims

1. A semi-persistence scheduling control method, comprising:
obtaining (S101) dynamic service statistical information generated by dynamic service due to dynamic scheduling and accumulated in a historical time period, the dynamic service statistical information comprising at least one of: new transmission times of dynamic scheduling, and new transmission service data amount of dynamic scheduling; and
determining (S102) whether the dynamic service statistical information exceeds a set threshold value; if the dynamic service statistical information exceeds the set threshold value, allocating a resource without using semi-persistence scheduling in a current time period (S103); and if the dynamic service statistical information does not exceed the set threshold value, allocating the resource by using the semi-persistence scheduling in the current time period (S104).

2. The semi-persistence scheduling control method according to claim 1, wherein the obtaining the dynamic service statistical information generated by the dynamic service due to the dynamic scheduling and accumulated in the historical time period (S101) comprises:
obtaining the dynamic service statistical information generated by the dynamic service due to the dynamic scheduling and accumulated in a previous historical time period immediately preceding the current time period.

3. The semi-persistence scheduling control method according to claim 2, wherein the determining whether the dynamic service statistical information exceeds the set threshold value (S102) is performed by one of the following manners:
when obtaining the new transmission times of dynamic scheduling, determining whether the new transmission times of dynamic scheduling exceeds a preset first threshold value;
when obtaining the new transmission service data amount of dynamic scheduling, determining whether the new transmission service data amount of dynamic scheduling exceeds a preset second threshold value; and
when obtaining the new transmission times of dynamic scheduling and the new transmission service data amount of dynamic scheduling, the determination comprises one of the following ways:
only determining whether the new transmission times of dynamic scheduling exceeds the preset first threshold value;
only determining whether the new transmission service data amount of dynamic scheduling exceeds the preset second threshold value; and
determining whether the new transmission times of dynamic scheduling exceeds the preset first threshold value and also determining whether the new transmission service data amount of dynamic scheduling exceeds the preset second threshold value.

4. The semi-persistence scheduling control method according to any one of claims 1 to 3, wherein in the case where a semi-persistence scheduling state has been activated in the historical time period, the step of allocating the resource without using the semi-persistence scheduling in the current time period if the dynamic service statistical information exceeds the set threshold value (S103); and allocating the resource by using the semi-persistence scheduling in the current time period if the dynamic service statistical information does not exceed the set threshold value (S104), comprises:
if the dynamic service statistical information exceeds the set threshold value, deactivating the semi-persistence scheduling state within the current time period, releasing a semi-persistence scheduling resource, and allocating the resource using dynamic scheduling; and if the dynamic service statistical information does not exceed the set threshold value, maintaining the semi-persistence scheduling state within the current time period, and allocating the resource by using the semi-persistence scheduling.

5. The semi-persistence scheduling control method according to any one of claims 1 to 3, wherein in the case where the semi-persistence scheduling state has not been activated within the historical time period, the step of allocating the resource without using the semi-persistence scheduling in the current time period if the dynamic service statistical information exceeds the set threshold value; and allocating the resource by using the semi-persistence scheduling in the current time period if the dynamic service statistical information does not exceed the set threshold value, comprises:
if the dynamic service statistical information exceeds the set threshold value, not activating the semi-persistence scheduling state within the current time period, and allocating the resource by using the dynamic scheduling; and if the dynamic service statistical information does not exceed the set threshold value, activating the semi-persistence scheduling state within the current time period, and allocating the resource by using the semi-persistence scheduling.

6. A semi-persistence scheduling control device, comprising:
an information obtaining module (1) configured to obtain dynamic service statistical information generated by dynamic service due to dynamic scheduling and accumulated in a historical time period, the dynamic service statistical information comprising at least one of: new transmission times of dynamic scheduling, and new transmission service data amount of dynamic scheduling;
an information determining module (2) configured to determine whether the dynamic service statistical information obtained by the information obtaining module (1) exceeds a set threshold value; and
a scheduling control module (3) configured to, if the information determining module (2) determines that the dynamic service statistical information exceeds the set threshold value, allocate a resource without using semi-persistence scheduling in a current time period; and if the information determining module (2) determines that the dynamic service statistical information does not exceed the set threshold value, allocate the resource by using the semi-persistence scheduling in the current time period.

7. The semi-persistence scheduling control device according to claim 6, wherein the information obtaining module (1) is configured to obtain the dynamic service statistical information generated by the dynamic service due to the dynamic scheduling and accumulated in a previous historical time period immediately preceding the current time period.

8. The semi-persistence scheduling control device according to claim 7, wherein
the information determining module (2) is configured to, when the information obtaining module (1) obtains the new transmission times of dynamic scheduling, determine whether the new transmission times of dynamic scheduling exceeds a preset first threshold value; or
the information determining module (2) is configured to, when the information obtaining module (1) obtains the new transmission service data amount of dynamic scheduling, determine whether the new transmission service data amount of dynamic scheduling exceeds a preset second threshold value; or
the information determining module (2) is configured to, when the information obtaining module (1) obtains the new transmission times of dynamic scheduling and the new transmission service data amount of dynamic scheduling, only determine whether the new transmission times of dynamic scheduling exceeds the preset first threshold value; or only determine whether the new transmission service data amount of dynamic scheduling exceeds the preset second threshold value; or determine whether the new transmission times of dynamic scheduling exceeds the preset first threshold value and also determine whether the new transmission service data amount of dynamic scheduling exceeds the preset second threshold value.

9. The semi-persistence scheduling control device according to any one of claims 6 to 8, wherein in the case where a semi-persistence scheduling state has been activated in the historical time period, the scheduling control module (3) is configured to, if the information determining module (2) determines that the dynamic service statistical information exceeds the set threshold value, deactivate the semi-persistence scheduling state within the current time period, release a semi-persistence scheduling resource, and allocate the resource using dynamic scheduling; and if the information determining module (2) determines that the dynamic service statistical information does not exceed the set threshold value, maintain the semi-persistence scheduling state within the current time period, and allocate the resource by using the semi-persistence scheduling.

10. The semi-persistence scheduling control device according to any one of claims 6 to 8, wherein in the case where the semi-persistence scheduling state has not been activated within the historical time period, the scheduling control module (3) is configured to, if the information determining module (2) determines that the dynamic service statistical information exceeds the set threshold value, not activate the semi-persistence scheduling state within the current time period, and allocate the resource by using the dynamic scheduling; and if the information determining module (2) determines that the dynamic service statistical information does not exceed the set threshold value, activate the semi-persistence scheduling state within the current time period, and allocate the resource by using the semi-persistence scheduling.

11. A computer program, which when executing on a processor of a device, performs a method according to any one of claims 1 to 5.

## Patentansprüche

1. Verfahren zur Steuerung von semipersistenter Planung, umfassend:
Erhalten (S101) von statistischen Informationen über den dynamischen Dienst, die vom dynamischen Dienst wegen dynamischer Planung erzeugt und in einem historischen Zeitraum angesammelt werden, wobei die statistischen Informationen über den dynamischen Dienst zumindest eine von den folgenden umfassen: neue Übertragungszeiten von dynamischer Planung und Dienstdatenmenge der neuen Übertragung von dynamischer Planung; und
Bestimmen (S102), ob die statistischen Informationen über den dynamischen Dienst einen festgesetzten Schwellenwert übersteigen; wenn die statistischen Informationen über den dynamischen Dienst den festgesetzten Schwellenwert übersteigen, Zuordnen einer Ressource ohne Verwendung von semipersistenter Planung in einem aktuellen Zeitraum (S103); und wenn die statistischen Informationen über den dynamischen Dienst den festgesetzten Schwellenwert nicht übersteigen, Zuordnen der Ressource unter Verwendung der semipersistenten Planung in dem aktuellen Zeitraum (S104).

2. Verfahren zur Steuerung von semipersistenter Planung nach Anspruch 1, worin das Erhalten der statistischen Informationen über den dynamischen Dienst, die vom dynamischen Dienst wegen dynamischer Planung erzeugt und in dem historischen Zeitraum angesammelt werden (S101), umfasst:
Erhalten der statistischen Informationen über den dynamischen Dienst, die vom dynamischen Dienst wegen dynamischer Planung erzeugt und in einem vorhergehenden historischen Zeitraum unmittelbar vor dem aktuellen Zeitraum angesammelt werden.

3. Verfahren zur Steuerung von semipersistenter Planung nach Anspruch 2, worin das Bestimmen, ob die statistischen Informationen über den dynamischen Dienst den festgesetzten Schwellenwert übersteigen (S102), durch eine der folgenden Arten und Weisen durchgeführt wird:
beim Erhalten der neuen Übertragungszeiten von dynamischer Planung, Bestimmen, ob die neuen Übertragungszeiten von dynamischer Planung einen festgesetzten ersten Schwellenwert übersteigen;
beim Erhalten der Dienstdatenmenge der neuen Übertragung von dynamischer Planung, Bestimmen, ob die Dienstdatenmenge der neuen Übertragung von dynamischer Planung einen festgesetzten zweiten Schwellenwert übersteigt; und
beim Erhalten der neuen Übertragungszeiten von dynamischer Planung und der Dienstdatenmenge der neuen Übertragung von dynamischer Planung, umfasst das Bestimmen eine der folgenden Arten und Weisen:
nur das Bestimmen, ob die neuen Übertragungszeiten von dynamischer Planung den festgesetzten ersten Schwellenwert übersteigen;
nur das Bestimmen, ob die Dienstdatenmenge der neuen Übertragung von dynamischer Planung den festgesetzten zweiten Schwellenwert übersteigt; und
Bestimmen, ob die neuen Übertragungszeiten von dynamischer Planung den festgesetzten ersten Schwellenwert übersteigen, und auch Bestimmen, ob die Dienstdatenmenge der neuen Übertragung von dynamischer Planung den festgesetzten zweiten Schwellenwert übersteigt.

4. Verfahren zur Steuerung von semipersistenter Planung nach einem der Ansprüche 1 bis 3, worin für den Fall, dass ein semipersistenter Planungszustand im historischen Zeitraum aktiviert wurde, der Schritt des Zuordnens der Ressource ohne Verwendung von semipersistenter Planung in dem aktuellen Zeitraum, wenn die statistischen Informationen über den dynamischen Dienst den festgesetzten Schwellenwert übersteigen (S103); und des Zuordnens der Ressource unter Verwendung von semipersistenter Planung in dem aktuellen Zeitraum, wenn die statistischen Informationen über den dynamischen Dienst den festgesetzten Schwellenwert nicht übersteigen (S104), umfasst:
wenn die statistischen Informationen über den dynamischen Dienst den festgesetzten Schwellenwert übersteigen, Deaktivieren des semipersistenten Planungszustands innerhalb des aktuellen Zeitraums, Freigeben einer semipersistenten Planungsressource, und Zuordnen der Ressource unter Verwendung von semipersistenter Planung; und wenn die statistischen Informationen über den dynamischen Dienst den festgesetzten Schwellenwert nicht übersteigen, Beibehalten des semipersistenten Planungszustands innerhalb des aktuellen Zeitraums, und Zuordnen der Ressource unter Verwendung der semipersistenten Planung.

5. Verfahren zur Steuerung von semipersistenter Planung nach einem der Ansprüche 1 bis 3, worin für den Fall, dass der semipersistente Planungszustand innerhalb des historischen Zeitraums nicht aktiviert wurde, der Schritt des Zuordnens der Ressource ohne Verwendung von semipersistenter Planung in dem aktuellen Zeitraum, wenn die statistischen Informationen über den dynamischen Dienst den festgesetzten Schwellenwert übersteigen; und des Zuordnens der Ressource unter Verwendung der semipersistenten Planung in dem aktuellen Zeitraum, wenn die statistischen Informationen über den dynamischen Dienst den festgesetzten Schwellenwert nicht übersteigen, umfasst:
wenn die statistischen Informationen über den dynamischen Dienst den festgesetzten Schwellenwert übersteigen, Nicht-Aktivieren des semipersistenten Planungszustands innerhalb des aktuellen Zeitraums, und Zuordnen der Ressource unter Verwendung von semipersistenter Planung; und wenn die statistischen Informationen über den dynamischen Dienst den festgesetzten Schwellenwert nicht übersteigen, Aktivieren des semipersistenten Planungszustands innerhalb des aktuellen Zeitraums, und Zuordnen der Ressource unter Verwendung der semipersistenten Planung.

6. Vorrichtung zur Steuerung von semipersistenter Planung, umfassend:
ein Informationserhaltungsmodul (1), das dafür ausgelegt ist, statistische Informationen über den dynamischen Dienst zu erhalten, die vom dynamischen Dienst wegen dynamischer Planung erzeugt und in einem historischen Zeitraum angesammelt werden, wobei die statistischen Informationen über den dynamischen Dienst zumindest eine von den folgenden umfassen: neue Übertragungszeiten von dynamischer Planung und Dienstdatenmenge der neuen Übertragung von dynamischer Planung;
ein Informationsbestimmungsmodul (2), das dafür ausgelegt ist, zu bestimmen, ob die statistischen Informationen über den dynamischen Dienst, die vom Informationserhaltungsmodul (1) erhalten werden, einen festgesetzten Schwellenwert übersteigen; und
ein Planungssteuerungsmodul (3), das dafür ausgelegt ist, wenn das Informationsbestimmungsmodul (2) bestimmt, dass die statistischen Informationen über den dynamischen Dienst den festgesetzten Schwellenwert übersteigen, eine Ressource ohne Verwendung von semipersistenter Planung in einem aktuellen Zeitraum zuzuordnen; und wenn das Informationsbestimmungsmodul (2) bestimmt, dass die statistischen Informationen über den dynamischen Dienst den festgesetzten Schwellenwert nicht übersteigen, die Ressource unter Verwendung der semipersistenten Planung in dem aktuellen Zeitraum zuzuordnen.

7. Vorrichtung zur Steuerung von semipersistenter Planung nach Anspruch 6, worin das Informationserhaltungsmodul (1) dafür ausgelegt ist, die statistischen Informationen über den dynamischen Dienst zu erhalten, die vom dynamischen Dienst wegen dynamischer Planung erzeugt und in einem vorhergehenden historischen Zeitraum unmittelbar vor dem aktuellen Zeitraum angesammelt werden.

8. Vorrichtung zur Steuerung von semipersistenter Planung nach Anspruch 7, worin
das Informationsbestimmungsmodul (2) dafür ausgelegt ist, wenn das Informationserhaltungsmodul (1) die neuen Übertragungszeiten von dynamischer Planung erhält, zu bestimmen, ob die neuen Übertragungszeiten von dynamischer Planung einen festgesetzten ersten Schwellenwert übersteigen; oder
das Informationsbestimmungsmodul (2) dafür ausgelegt ist, wenn das Informationserhaltungsmodul (1) die Dienstdatenmenge der neuen Übertragung von dynamischer Planung erhält, zu bestimmen, ob die Dienstdatenmenge der neuen Übertragung von dynamischer Planung einen festgesetzten zweiten Schwellenwert übersteigt; oder
das Informationsbestimmungsmodul (2) dafür ausgelegt ist, wenn das Informationserhaltungsmodul (1) die neuen Übertragungszeiten von dynamischer Planung und die Dienstdatenmenge der neuen Übertragung von dynamischer Planung erhält, nur zu bestimmen, ob die neuen Übertragungszeiten von dynamischer Planung den festgesetzten ersten Schwellenwert übersteigen; oder nur zu bestimmen, ob die Dienstdatenmenge der neuen Übertragung von dynamischer Planung den festgesetzten zweiten Schwellenwert übersteigt; oder zu bestimmen, ob die neuen Übertragungszeiten von dynamischer Planung den festgesetzten ersten Schwellenwert übersteigen, und auch zu bestimmen, ob die Dienstdatenmenge der neuen Übertragung von dynamischer Planung den festgesetzten zweiten Schwellenwert übersteigt.

9. Vorrichtung zur Steuerung von semipersistenter Planung nach einem der Ansprüche 6 bis 8, worin für den Fall, dass ein semipersistenter Planungszustand im historischen Zeitraum aktiviert wurde, das Planungssteuerungsmodul (3) dafür ausgelegt ist, wenn das Informationsbestimmungsmodul (2) bestimmt, dass die statistischen Informationen über den dynamischen Dienst den festgesetzten Schwellenwert übersteigen, den semipersistenten Planungszustand innerhalb des aktuellen Zeitraums zu deaktivieren, eine semipersistente Planungsressource freizugeben, und die Ressource unter Verwendung von semipersistenter Planung zuzuordnen; und wenn das Informationsbestimmungsmodul (2) bestimmt, dass die statistischen Informationen über den dynamischen Dienst den festgesetzten Schwellenwert nicht übersteigen, den semipersistenten Planungszustand innerhalb des aktuellen Zeitraums beizubehalten, und die Ressource unter Verwendung der semipersistenten Planung zuzuordnen.

10. Vorrichtung zur Steuerung von semipersistenter Planung nach einem der Ansprüche 6 bis 8, worin für den Fall, dass der semipersistente Planungszustand innerhalb des historischen Zeitraums nicht aktiviert wurde, das Planungssteuerungsmodul (3) dafür ausgelegt ist, wenn das Informationsbestimmungsmodul (2) bestimmt, dass die statistischen Informationen über den dynamischen Dienst den festgesetzten Schwellenwert übersteigen, den semipersistenten Planungszustand innerhalb des aktuellen Zeitraums nicht zu aktivieren, und die Ressource unter Verwendung von semipersistenter Planung zuzuordnen; und wenn das Informationsbestimmungsmodul (2) bestimmt, dass die statistischen Informationen über den dynamischen Dienst den festgesetzten Schwellenwert nicht übersteigen, den semipersistenten Planungszustand innerhalb des aktuellen Zeitraums zu aktivieren, und die Ressource unter Verwendung der semipersistenten Planung zuzuordnen.

11. Computerprogramm, das, wenn es an einem Prozessor einer Vorrichtung ausgeführt wird, ein Verfahren nach einem der Ansprüche 1 bis 5 durchführt.

## Revendications

1. Méthode de commande de planification semi-persistante, comprenant :
l'obtention (S101) des informations statistiques de service dynamique générées par un service dynamique en raison de la planification dynamique et accumulées dans une période de temps historique, les informations statistiques de service dynamique comprenant au moins l'un entre : les nouveaux temps de transmission de planification dynamique et une nouvelle quantité de données de service de transmission de planification dynamique ; et
la détermination (S102) si les informations statistiques de service dynamique dépassent une valeur de seuil définie ; si les informations statistiques de service dynamique dépassent la valeur de seuil définie, l'allocation d'une ressource sans utiliser une planification semi-persistante dans une période de temps actuelle (S 103) ; et si les informations statistiques de service dynamique ne dépassent pas la valeur de seuil définie, l'allocation de la ressource en utilisant la planification semi-persistante dans la période de temps actuelle (S 104).

2. Méthode de commande de planification semi-persistante selon la revendication 1, où l'obtention des informations statistiques de service dynamique générées par le service dynamique en raison de la planification dynamique et accumulées dans la période de temps historique (S101) comprend :
l'obtention des informations statistiques de service dynamique générées par le service dynamique en raison de la planification dynamique et accumulées dans une période de temps historique précédente qui précède immédiatement la période de temps actuelle.

3. Méthode de commande de planification semi-persistante selon la revendication 2, où la détermination si les informations statistiques de service dynamique dépassent la valeur de seuil définie (S 102) est effectuée par l'une des manières suivantes :
lors de l'obtention des nouveaux temps de transmission de planification dynamique, la détermination si les nouveaux temps de transmission de planification dynamique dépassent une première valeur de seuil prédéfinie ;
lors de l'obtention de la nouvelle quantité de données de service de transmission de planification dynamique, la détermination si la nouvelle quantité de données de service de transmission de planification dynamique dépasse une deuxième valeur de seuil prédéfinie ; et
lors de l'obtention des nouveaux temps de transmission de planification dynamique et de la nouvelle quantité de données de service de transmission de planification dynamique, la détermination comprend l'une des manières suivantes :
la seule détermination si les nouveaux temps de transmission de planification dynamique dépassent la première valeur de seuil prédéfinie ;
la seule détermination si la nouvelle quantité de données de service de transmission de planification dynamique dépasse la deuxième valeur de seuil prédéfinie ; et
la détermination si les nouveaux temps de transmission de planification dynamique dépassent la première valeur de seuil prédéfinie, ainsi que la détermination si la nouvelle quantité de données de service de transmission de planification dynamique dépasse la deuxième valeur de seuil prédéfinie.

4. Méthode de commande de planification semi-persistante selon l'une quelconque des revendications de 1 à 3, où dans le cas où un état de planification semi-persistante a été activé dans la période de temps historique, l'étape d'allocation de la ressource sans utiliser la planification semi-persistante dans la période de temps actuelle si les informations statistiques de service dynamique dépassent la valeur de seuil définie (S103) ; et l'allocation de la ressource en utilisant la planification semi-persistante dans la période de temps actuelle si les informations statistiques de service dynamique ne dépassent pas la valeur de seuil définie (S 104), comprend :
si les informations statistiques de service dynamique dépassent la valeur de seuil définie, la désactivation de l'état de planification semi-persistante dans la période de temps actuelle, l'émission d'une ressource de planification semi-persistante et l'allocation de la ressource en utilisant la planification dynamique ; et si les informations statistiques de service dynamique ne dépassent pas la valeur de seuil définie, le maintien de l'état de planification semi-persistante dans la période de temps actuelle, et l'allocation de la ressource en utilisant la planification semi-persistante.

5. Méthode de commande de planification semi-persistante selon l'une quelconque des revendications de 1 à 3, où dans le cas où l'état de planification semi-persistante n'a pas été activé dans la période de temps historique, l'étape d'allocation de la ressource sans utiliser la planification semi-persistante dans la période de temps actuelle si les informations statistiques de service dynamique dépassent la valeur de seuil définie ; et l'allocation de la ressource en utilisant la planification semi-persistante dans la période de temps actuelle si les informations statistiques de service dynamique ne dépassent pas la valeur de seuil définie, comprend :
si les informations statistiques de service dynamique dépassent la valeur de seuil définie, la non activation de l'état de planification semi-persistante dans la période de temps actuelle, et l'allocation de la ressource en utilisant la planification dynamique ; et si les informations statistiques de service dynamique ne dépassent pas la valeur de seuil définie, l'activation de l'état de planification semi-persistante dans la période de temps actuelle, et l'allocation de la ressource en utilisant la planification semi-persistante.

6. Dispositif de commande de planification semi-persistante, comprenant :
un module d'obtention des informations (1) configuré pour obtenir des informations statistiques de service dynamique générées par un service dynamique en raison de la planification dynamique et accumulées dans une période de temps historique, les informations statistiques de service dynamique comprenant au moins l'un entre : les nouveaux temps de transmission de planification dynamique et la nouvelle quantité de données de service de transmission de planification dynamique ;
un module de détermination des informations (2) configuré pour déterminer si les informations statistiques de service dynamique obtenues par le module d'obtention des informations (1) dépassent une valeur de seuil définie ; et
un module de commande de planification (3) configuré pour, si le module de détermination d'informations (2) détermine que les informations statistiques de service dynamique dépassent la valeur de seuil définie, allouer une ressource sans utiliser la planification semi-persistante dans une période de temps actuelle ; et si le module de détermination des informations (2) détermine que les informations statistiques de service dynamique ne dépassent pas la valeur de seuil définie, allouer la ressource en utilisant la planification semi-persistante dans la période de temps actuelle.

7. Dispositif de commande de planification semi-persistante selon la revendication 6, où le module d'obtention des informations (1) est configuré pour obtenir les informations statistiques de service dynamique générées par le service dynamique en raison de la planification dynamique et accumulées dans une période de temps historique précédente qui précède immédiatement la période de temps actuelle.

8. Dispositif de commande de planification semi-persistante selon la revendication 7, où
le module de détermination des informations (2) est configuré pour, lorsque le module d'obtention des informations (1) obtient les nouveaux temps de transmission de planification dynamique, détermine si les nouveaux temps de transmission de planification dynamique dépassent une première valeur de seuil prédéfinie ; ou
le module de détermination des informations (2) est configuré pour, lorsque le module d'obtention des informations (1) obtient la nouvelle quantité de données de service de transmission de planification dynamique, déterminer si la nouvelle quantité de données de service de transmission de planification dynamique dépasse une deuxième valeur de seuil prédéfinie ; ou
le module de détermination des informations (2) est configuré pour, lorsque le module d'obtention des informations (1) obtient les nouveaux temps de transmission de planification dynamique et la nouvelle quantité de données de service de transmission de planification dynamique, déterminer uniquement si les nouveaux temps de transmission de planification dynamique dépassent la première valeur de seuil prédéfinie ; ou déterminer uniquement si la nouvelle quantité de données de service de transmission de planification dynamique dépasse la deuxième valeur de seuil prédéfinie ; ou déterminer si les nouveaux temps de transmission de planification dynamique dépassent la première valeur de seuil prédéfinie, ainsi que déterminer si la nouvelle quantité de données de service de transmission de planification dynamique dépasse la deuxième valeur de seuil prédéfinie.

9. Dispositif de commande de planification semi-persistante selon l'une quelconque des revendications de 6 à 8, où dans le cas où un état de planification semi-persistante a été activé dans la période de temps historique, le module de commande de planification (3) est configuré pour, si le module de détermination des informations (2) détermine que les informations statistiques de service dynamique dépassent la valeur de seuil définie, désactiver l'état de planification semi-persistante dans la période de temps actuelle, émettre une ressource de planification semi-persistante et allouer la ressource en utilisant la planification dynamique ; et si le module de détermination des informations (2) détermine que les informations statistiques de service dynamique ne dépassent pas la valeur de seuil définie, maintenir l'état de planification semi-persistante dans la période de temps actuelle et allouer la ressource en utilisant la planification semi-persistante.

10. Dispositif de commande de planification semi-persistante selon l'une quelconque des revendications de 6 à 8, où dans le cas où l'état de planification semi-persistante n'a pas été activé dans la période de temps historique, le module de commande de planification (3) est configuré pour, si le module de détermination des informations (2) détermine que les informations statistiques de service dynamique dépassent la valeur de seuil définie, ne pas activer l'état de planification semi-persistante dans la période de temps actuelle, et allouer la ressource en utilisant la planification dynamique ; et si le module de détermination des informations (2) détermine que les informations statistiques de service dynamique ne dépassent pas la valeur de seuil définie, activer l'état de planification semi-persistante dans la période de temps actuelle et allouer la ressource en utilisant la planification semi-persistante.

11. Un programme informatique, qui lors de l'exécution sur un processeur d'un dispositif exécute une méthode selon l'une quelconque des revendications de 1 à 5.
